# EUROPEAN PATENT SPECIFICATION

(11) **EP 2 835 855 B1**
(45) Date of publication and mention of the grant of the patent: **22.03.2017**
(21) Application number: 13854231.1
(22) Date of filing: 12.10.2013
(51) Int. Cl.: H01M 10/0525, H01M 4/38, H01M 4/587, H01M 10/44, H01M 12/08, H01M 4/02, H01M 4/36, H01M 4/48, H01M 4/133, H01M 4/134

(54) **LITHIUM-AIR BATTERY AND PREPARATION METHOD THEREFOR**
LITHIUM-LUFT-BATTERIE UND HERSTELLUNGSVERFAHREN DAFÜR
BATTERIE AU LITHIUM-AIR ET SON PROCÉDÉ DE PRÉPARATION

(30) Priority: 31.05.2013 CN 201310211493
(43) Date of publication of application: 11.02.2015
(73) Proprietor: Huawei Technologies Co., Ltd., Longgang District Shenzhen, Guangdong 518129 (CN)
(72) Inventor: SONG, Hongfeng, Shenzhen Guangdong 518129 (CN)
(74) Representative: Goddar, Heinz J.
(86) International application number: PCT/CN2013/085092
(87) International publication number: WO 2014/190654

(56) References cited:
- WO-A1-03/063270
- CN-A- 101 267 057
- CN-A- 102 655 249
- CN-A- 103 022 413

## Description

### TECHNICAL FIELD

The present invention relates to the field of secondary battery technologies, and in particular, to a lithium-air battery and a preparation method thereof.

### BACKGROUND

A lithium-air battery is a battery using lithium (simple substance or alloy) as an anode and using oxygen in the air (or pure oxygen) as a cathode reactant. The lithium-air battery has a theoretical specific energy up to 11140Wh/kg, 1 to 2 orders of magnitude higher than the energy density of a nickel metal hydride battery and a lithium-ion battery system, and has advantages such as high energy density, easy miniaturization and light weight, thereby receiving increasing attention from researchers all over the word.

Many problems need to be solved in the development of the lithium-air battery, for example, a conventional lithium-air battery uses lithium metal foil as a negative electrode, and during a charge/discharge cycling procedure of the lithium-air battery, the lithium metal negative electrode is continuously dissolved and deposited, so that phenomena such as dendritic crystal, "dead lithium", and interface deterioration easily occur, which results in a decrease of the lithium-air battery cycling performance, and in a worse situation, the dendritic crystal penetrates a membrane to be in contact with a positive electrode, thus causing internal short circuit, and having a potential risk of ignition or explosion. Therefore, the lithium-air battery always has problems in cyclicity and safety, so that real commercial production cannot be implemented.

In order to improve the cycling performance of the lithium metal negative electrode and solve the safety problem thereof, many attempts are made, for example, adding an additive to an electrolyte to form a protective film, pre-processing a surface of a lithium metal negative electrode chemically to form a protective layer, coating the surface of a lithium metal negative electrode by using a protecting agent, and the like. The methods increase the stability of the lithium metal negative electrode to a certain extent; however, after many cycles, the protective layer becomes unstable and breaks during the charge/discharge procedure, due to intercalation and deintercalation of lithium ions, so that a large amount of electrolyte solution is in contact with the lithium metal through a gap on the protective layer, resulting in decomposition of the electrolyte solution and continuous decrease of the volume, and in a worse situation, safety risks such as dendritic crystal still occurs.

US 20120223680 discloses a lithium ion air battery. The lithium ion air battery includes a lithium metal electrode, an air electrode and an intercalation electrode therebetween. The intercalation electrode is charged with lithium ions intercalated from the lithium metal electrode, and then used as an anode. The electric energy is generated from a reaction with the air electrode that is a cathode.

### SUMMARY

In view of this, a first aspect of embodiments of the present invention provides a lithium-air battery of claim 1 and a preparation method of claim 6, so as to solve the problems of poor cycling performance and poor safety performance of the lithium-air battery in the prior art due to phenomena such as dendritic crystal and "dead lithium". Moreover, the lithium-air battery has a simple preparation process and low cost, and is suitable for mass industrial production, thereby having relatively high application values. A second aspect of the embodiments of the present invention provides a preparation method of a lithium-air battery.

According to the first aspect, an embodiment of the present invention provides a lithium-air battery, including: a positive electrode layer, a negative electrode layer, and an electrolyte layer, where the positive electrode layer, the negative electrode layer and the electrolyte layer are accommodated in a receiving space formed by a housing, a side of the housing adjacent to the positive electrode layer and away from the negative electrode layer is provided with a pore absorbing air from outside the housing; the positive electrode layer includes a positive electrode current collector and a reaction layer that is coated or hot-pressed on the positive electrode current collector and that has an oxygen reduction capability; the negative electrode layer includes a lithium storage layer having lithium ion intercalation and deintercalation capabilities and a lithium source negative electrode active material layer coated or hot-pressed on a surface of the lithium storage layer; and the electrolyte layer is sandwiched between the reaction layer in the positive electrode layer and the negative electrode layer.

When the lithium-air battery is used as a secondary battery, during a first discharge procedure, in the lithium source negative electrode active material layer of the negative electrode layer having a lithium ion supplying capability, lithium metal or a lithium-containing compound, serving as the negative electrode active material, emits lithium ions, the lithium ions enter the reaction layer in the positive electrode layer through the electrolyte layer, electrons are supplied to an external circuit wire through a tab, and the positive electrode layer captures oxygen from an external air environment through a pore that is disposed in the housing and absorbs air from outside the housing, so that the lithium ions, the oxygen, and the electrons reaching the positive electrode layer through the external circuit perform oxygen reduction, so as to produce Li oxide (for example, LiO₂ and Li₂O₂) in the positive electrode layer. In a subsequent charge procedure, the Li oxide in the positive electrode layer is decomposed into Li ions, and the Li ions enter the lithium storage layer through the electrolyte layer and react with the material of the lithium storage layer to form lithium intercalation-state graphite or lithium silicon alloy, lithium tin alloy, and the like. The lithium storage layer does not have any lithium ion originally, and has Li ions intercalated and stored after a first charge procedure, where the Li ions may be used in a subsequent discharge procedure. In the subsequent charge and discharge procedures of the lithium-air battery, the lithium storage layer serves the purpose of deintercalating and intercalating lithium ions, and forms a reaction electrode pair with the positive electrode layer, and can be used cyclically. The lithium metal or lithium-containing compound, serving as the negative electrode active material, in the negative electrode active material layer in the embodiment of the present invention emits lithium ions, and the lithium source negative electrode active material layer completely disappears after the first discharge, which avoids the problems of dendritic crystal and "dead lithium" in the prior art due to dissolving and deposition of the negative electrode active material during cyclic use, thereby improving the cycling performance and safety performance of the lithium-air battery.

The positive electrode layer may be a porous air electrode used by a conventional lithium-air battery, and a structure of the positive electrode layer includes the reaction layer having an oxygen reduction capability and the current collector having an electron collecting capability. Preferably, the material of the reaction layer is a carbon-based porous material having a conducting capability. More preferably, the carbon-based porous material is carbon black, acetylene black, activated carbon, carbon nano tube, carbon fiber, or mesoporous carbon. The material of the positive electrode current collector may be a carbon material or metal, and the positive electrode current collector may have a foil structure or a net structure. Preferably, the positive electrode current collector is nickel foam or carbon paper.

The positive electrode layer may also include a binder used for shaping the reaction layer, and the binder may be selected from, but not limited to, polyvinylidene fluoride (PVDF), polytetrafluoroethylene (PTFE), and polyvinylidene fluoride-hexafluoropropylene (PVDF-HFP). The positive electrode layer may also include a catalyst, and the catalyst may be selected from, but not limited to, manganese dioxide and cobalt phthalocyanine.

The negative electrode layer includes the lithium storage layer having lithium ion intercalation and deintercalation capabilities. The lithium storage layer may be a negative electrode plate of a conventional lithium ion battery, and includes a carbon family material, and the like. Preferably, the lithium storage layer is formed by one of a graphite negative electrode material, a silicon series negative electrode material, a germanium series negative electrode material and a tin series negative electrode material, together with a conductive agent and a binder. More preferably, the graphite negative electrode material is mesocarbon microbeads (MCMB), a composite material of nano silicon dioxide and carbon, or tin alloy.

The binder may be selected from, but not limited to, polyvinylidene fluoride (PVDF), polytetrafluoroethylene (PTFE), and polyvinylidene fluoride-hexafluoropropylene (PVDF-HFP). The conductive agent may be selected from carbon black, acetylene black, activated carbon, carbon nano tube, carbon fiber, and mesoporous carbon.

Preferably, the lithium storage layer is disposed on a surface of the negative electrode current collector through coating. The negative electrode current collector may have a foil structure or a net structure. More preferably, the negative electrode current collector is copper foil.

The negative electrode layer further includes the lithium source negative electrode active material layer having a lithium ion supplying capability. Preferably, the material of the lithium source negative electrode active material layer is lithium metal, lithium alloy, lithium oxide, or lithium nitride. More preferably, the lithium alloy is lithium aluminum alloy, lithium tin alloy, lithium lead alloy, or lithium silicon alloy, the lithium oxide is lithium titanium oxide, and the lithium nitride is lithium cobalt nitride, lithium iron nitride, or lithium manganese nitride.

By controlling masses of the lithium source negative electrode active material layer and the lithium storage layer, the lithium source negative electrode active material layer may completely disappear after the first discharge, and the emitted lithium ions are intercalated into the lithium storage layer in the subsequent charge procedure. The complete disappearance of the lithium source negative electrode active material layer avoids the phenomena such as dendritic crystal and "dead lithium" to a maximum extent, thereby improving the cycling performance and safety performance of the lithium-air battery. Preferably, the mass of the lithium source negative electrode active material layer is 10% to 20% of the mass of the lithium storage layer. More preferably, the mass of the lithium source negative electrode active material layer is 15% of the mass of the lithium storage layer.

The lithium source negative electrode active material layer is disposed on a surface of the lithium storage layer. The lithium source negative electrode active material layer and the lithium storage layer may also be connected through a tab, and the tab serves the purpose of transmitting electrons to an external circuit wire.

The electrolyte layer is sandwiched between the reaction layer and the negative electrode layer, that is, the reaction layer and the negative electrode layer are connected through the electrolyte layer, where the reaction layer may be connected to the lithium source negative electrode active material layer, or the reaction layer may also be connected to the lithium storage layer. The electrolyte layer is configured to conduct lithium ions. The form of the electrolyte layer is not limited, and the electrolyte layer may be a conventional liquid electrolyte, a gel electrolyte, a compound electrolyte, or a solid-state electrolyte. When the electrolyte layer is a liquid electrolyte, the electrolyte layer needs to be used together with a membrane isolating the positive electrode layer from the negative electrode to prevent a short circuit between the positive electrode layer and the negative electrode layer.

The housing is configured to accommodate the positive electrode layer, the negative electrode layer, and the electrolyte layer. The housing may be a housing of a conventional lithium-air battery, which is generally of an air-open type, and is capable of capturing oxygen from an external air environment, and a structure of the housing may include a seal washer used to connect and seal the positive electrode layer and the negative electrode layer, and may include a waterproof, breathable film covering a surface of a pore. The shape of the housing may be, but not limited to, a coin shape, a flat plate shape, a cylinder shape, and a lamination shape. The material of the housing may be a plastic or metallic material.

The first aspect of the embodiment of the present invention provides a lithium-air battery, which achieves good cycling stability and safety performance, has a simple process and cost-effective preparation process, and is suitable for mass industrial production, thereby having great application values.

According to the second aspect, an embodiment of the present invention provides a preparation method of a lithium-air battery, and the method includes the following steps:
preparation of a positive electrode layer: coat a reaction layer having an oxygen reduction capability on a positive electrode current collector, so as to obtain the positive electrode layer;
preparation of a negative electrode layer: add a conductive agent, a binder, and an organic solution to a carbon family material having lithium ion intercalation and deintercalation capabilities, mixing them together obtain a slurry, and dry the slurry to obtain a lithium storage layer; and coat or hot-press a lithium source negative electrode active material layer on a surface of the lithium storage layer, so as to obtain the negative electrode layer; and
place the positive electrode layer, the negative electrode layer and an electrolyte layer into a receiving space formed by a housing, where the electrolyte layer is sandwiched between the reaction layer in the positive electrode layer and the negative electrode layer, and a side of the housing adjacent to the positive electrode layer and away from the negative electrode layer is provided with a pore absorbing air from outside the housing, so as to obtain the lithium-air battery after assembly.

The positive electrode layer may be a porous air electrode used by a conventional lithium-air battery, and a structure of the positive electrode layer includes the reaction layer having an oxygen reduction capability and the current collector having an electron collecting capability. Preferably, the material of the reaction layer is a carbon-based porous material having a conducting capability. More preferably, the carbon-based porous material is carbon black, acetylene black, activated carbon, carbon nano tube, carbon fiber, or mesoporous carbon. The material of the positive electrode current collector may be a carbon material or metal, and the positive electrode current collector may have a foil structure or a net structure. Preferably, the positive electrode current collector is nickel foam or carbon paper.

The method for disposing the reaction layer having the oxygen reduction capability on the positive electrode current collector is not limited, for example, a reaction layer material having an oxygen reduction capability is disposed on the positive electrode current collector through a coating or hot-pressing method.

The coating or hot-pressing method usually use a binder configured to shape the reaction layer, and the binder may be selected from, but not limited to, polyvinylidene fluoride (PVDF), polytetrafluoroethylene (PTFE), and polyvinylidene fluoride-hexafluoropropylene (PVDF-HFP).

In the coating or hot-pressing method, a catalyst and the like may also be added, and the catalyst may be selected from, but not limited to, manganese dioxide and cobalt phthalocyanine.

The preparation of the negative electrode layer includes adding a conductive agent, a binder, and an organic solution to the carbon family material having lithium ion intercalation and deintercalation capabilities, and drying to obtain the lithium storage layer.

The lithium storage layer may be a negative electrode plate of a conventional lithium ion battery, and includes a carbon family material, and the like. Preferably, the lithium storage layer is formed by one of a graphite negative electrode material, a silicon series negative electrode material, a germanium series negative electrode material and a tin series negative electrode material, together with a conductive agent and a binder. More preferably, the graphite negative electrode material is mesocarbon microbeads (MCMB), a composite material of nano silicon dioxide and carbon, or tin alloy. The conductive agent may be selected from carbon black, acetylene black, activated carbon, carbon nano tube, carbon fiber, and mesoporous carbon. The binder may be selected from, but not limited to, polyvinylidene fluoride (PVDF), polytetrafluoroethylene (PTFE), and polyvinylidene fluoride-hexafluoropropylene (PVDF-HFP). The organic solution may be selected from, but not limited to, N-methyl-2-pyrrolidone (NMP), N, N-dimethylformamide (DMF), and tetrahydrofuran (THF).

Dry until the organic solution is totally volatilized. Preferably, the drying is performed for 2 to 5 hours at a temperature of 80°C to 100°C.

Preferably, the material of the lithium source negative electrode active material layer is lithium metal, lithium alloy, lithium oxide, or lithium nitride. More preferably, the lithium alloy is lithium aluminum alloy, lithium tin alloy, lithium lead alloy, or lithium silicon alloy, the lithium oxide is lithium titanium oxide, and the lithium nitride is lithium cobalt nitride, lithium iron nitride, or lithium manganese nitride.

Preferably, after the slurry is obtained by means of mixing, the slurry is coated on the negative electrode current collector, and dried, so as to obtain the lithium storage layer coated on a surface of the negative electrode current collector. The negative electrode current collector may have a foil structure or a net structure. Preferably, the negative electrode current collector is copper foil.

By controlling masses of the lithium source negative electrode active material layer and the lithium storage layer, the lithium source negative electrode active material layer may completely disappear after a first discharge, and the emitted lithium ions are intercalated into the lithium storage layer in a subsequent charge procedure. The complete disappearance of the lithium source negative electrode active material layer avoids the phenomena such as dendritic crystal and "dead lithium" to a maximum extent, thereby improving the cycling performance and safety performance of the lithium-air battery. Preferably, the mass of the lithium source negative electrode active material layer is 10% to 20% of the mass of the lithium storage layer. More preferably, the mass of the lithium source negative electrode active material layer is 15% of the mass of the lithium storage layer.

The following describes the step of assembly, which is performed to place the positive electrode layer, the negative electrode layer and the electrolyte layer into the receiving space formed by the housing, so as to obtain the lithium-air battery after assembly.

The electrolyte layer is sandwiched between the reaction layer and the negative electrode layer, that is, the reaction layer and the negative electrode layer are connected through the electrolyte layer, where the electrode layer may be connected to the lithium source negative electrode active material layer may be connected to the electrode layer, or the lithium storage layer may be connected to the electrode layer. The electrolyte layer is configured to conduct lithium ions. The form of the electrolyte layer is not limited, and the electrolyte layer may be a conventional liquid electrolyte, a gel electrolyte, a compound electrolyte, or a solid-state electrolyte. When the electrolyte layer is a liquid electrolyte, the electrolyte layer needs to be used together with a membrane isolating the positive electrode layer from the negative electrode to prevent a short circuit between the positive electrode layer and the negative electrode layer.

The housing is configured to accommodate the positive electrode layer, the negative electrode layer, and the electrolyte layer. The housing may be a housing of a conventional lithium-air battery, which is generally of an air-open type, and is capable of capturing oxygen from an external air environment, and a structure of the housing may include a seal washer used to connect and seal the positive electrode layer and the negative electrode layer, and may include a waterproof, breathable film covering a surface of a pore. The shape of the housing may be, but not limited to, a coin shape, a flat plate shape, a cylinder shape, and a lamination shape. The material of the housing may be a plastic or metallic material.

A preparation method of a lithium-air battery provided in the second aspect of the embodiment of the present invention features a simple preparation process and low cost, and is suitable for mass industrial production, thereby having great application values.

In conclusion, in the embodiments of the present invention, by disposing a lithium source negative electrode material layer and a lithium storage layer, a lithium metal or lithium-containing compound, serving as a negative electrode active material, in a negative electrode active material layer emits lithium ions, and the lithium source negative electrode active material layer completely disappears after a first discharge, which avoids the problems of dendritic crystal and "dead lithium" in the prior art due to dissolving and deposition of the negative electrode active material during cyclic use, thereby improving the cycling performance and safety performance of a lithium-air battery. The advantages of the embodiments of the present invention are obvious according to this specification, or may be acquired through the embodiments of the present invention.

### BRIEF DESCRIPTION OF DRAWINGS

FIG. 1 is a schematic sectional structural diagram of a lithium-air battery according to a specific implementation manner of the present invention (FIG. 1 does not show a housing);
FIG. 2 is a three-dimensional schematic structural diagram of a lithium-air battery housing according to a specific implementation manner of the present invention; and
FIG. 3 is a schematic sectional structural diagram of a lithium-air battery housing according to a specific implementation manner of the present invention.

### DESCRIPTION OF EMBODIMENTS

The following are exemplary implementation manners of embodiments of the present invention, and it should be pointed that, a person of ordinary skill in the art may make various improvements and modifications without departing from the principle of the embodiments of the present invention, and the improvements and modifications also fall within the protection scope of the embodiments of the present invention.

### Embodiment 1

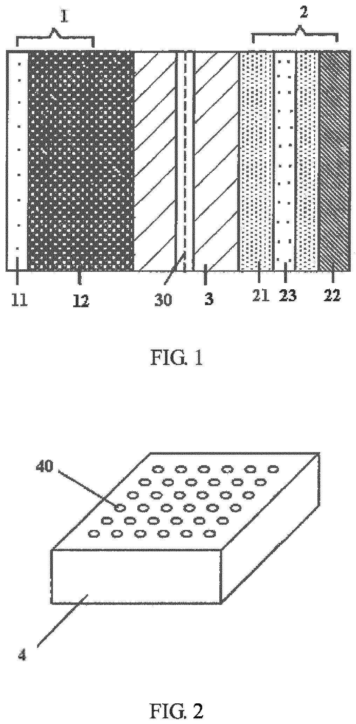

FIG 1 is a schematic sectional structural diagram of a lithium-air battery according to a specific implementation manner of the present invention (FIG. 1 does not show a housing). As shown in FIG. 1, the lithium-air battery according to the specific implementation manner of the present invention includes: a positive electrode layer 1, a negative electrode layer 2, an electrolyte layer 3, and a membrane 30. FIG. 1 does not show the housing. The positive electrode layer 1 is formed by a positive electrode current collector 11 and a reaction layer 12. The negative electrode layer 2 is formed by a lithium storage layer 21, a negative electrode current collector 23, and a lithium source negative electrode active material layer 22, where the lithium storage layer 21 is disposed on surfaces of two sides of the negative electrode current collector 23 by means of coating, and the lithium source negative electrode active material layer 22 is disposed on a surface of the lithium storage layer 21. The positive electrode layer 1, the negative electrode layer 2 and the membrane 30 are accommodated in a receiving space formed by the housing. The material of the electrolyte layer 3 is a non-water organic electrolyte in this embodiment and fills the remaining space in the housing, and the reaction layer 12 and the lithium storage layer 21 are connected through the non-water organic electrolyte.

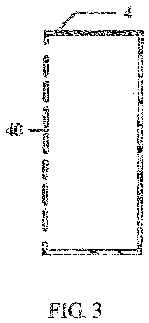

FIG. 2 is a three-dimensional schematic structural diagram of a lithium-air battery housing 4 according to a specific implementation manner of the present invention, and FIG. 3 is a schematic sectional structural diagram of a lithium-air battery housing according to a specific implementation manner of the present invention. As shown in FIG. 2 and FIG 3, one side of the housing 4 is provided with a pore 40 absorbing air from outside the housing.

A preparation method of a lithium-air battery includes the following steps:
Preparation of the positive electrode layer 1: clean the positive electrode current collector 11, which is nickel foam, by using acetone and deionized water in sequence, dry the positive electrode current collector 11 in the air and set aside for later use, use mesoporous carbon as a raw material of the reaction layer 12 and mix the mesoporous carbon with binder polyvinylidene fluoride, dissolve the mixture in an organic solution N-methyl pyrrolidone, stir the mixture until well combined, coat the mixture on the positive electrode current collector 11, which is nickel foam, by using a slurry machine, dry the coated nicked foam for 12 hours at 80°C in vacuum, so as to obtain the positive electrode layer 1.

Preparation of the negative electrode layer 2: use mesocarbon microbeads as a raw material of the lithium storage layer 21, mix the mesocarbon microbeads with conductive agent KS modified graphite and binder polyvinylidene fluoride, dissolve the mixture in an organic solution N-methyl pyrrolidone, stir the mixture until well combined to form a slurry, coat the slurry on copper foil of the negative electrode current collector 23 by using a slurry machine, dry the coated copper foil for 5 hours at 80°C in vacuum until the organic solution N-methyl pyrrolidone is totally volatilized, so as to obtain the lithium storage layer 21 on the negative electrode current collector 23, where a mass ratio of the mesocarbon microbeads, the KS modified graphite, the polyvinylidene fluoride and the N-methyl pyrrolidone is 1:0.03:0.04:10; use lithium metal foil as the lithium source negative electrode active material layer 22, dispose the lithium metal foil on a surface of the lithium storage layer 21, so as to obtain the negative electrode layer 2, where a mass of the lithium source negative electrode active material layer 22 is 15% of a mass of the lithium storage layer 21.

Assembly: place the positive electrode layer 1, the negative electrode layer 2, and the membrane 30 into a receiving space formed by the stainless steel housing 4, fill the receiving space with a non-water organic electrolyte to form the electrolyte layer 3, where the reaction layer 12 and the lithium storage layer 21 are connected through the electrolyte layer 3, and a side of the housing 4 adjacent to the positive electrode layer 1 and away from the negative electrode layer 2 is provided with the pore 40 absorbing air from outside the housing, and obtain the lithium-air battery after assembly. The non-water organic electrolyte layer 3 is a liquid electrolyte layer that has a concentration of 1M and that is formed by dissolving a lithium salt LiPF₆ into a non-water organic solution with a PC: EMC: DMC volume ratio of 1:1:1. The membrane 30 is a Cellgard membrane.

### Embodiment 2

A preparation method of a lithium-air battery includes the following steps:
Preparation of a positive electrode layer: dry a positive electrode current collector, which is carbon paper, for 12 hours at 80°C in vacuum and set aside for later use, use mesoporous carbon as a raw material of a reaction layer and mix the mesoporous carbon with binder polyvinylidene fluoride, dissolve the mixture in an organic solution N-methyl pyrrolidone, stir the mixture until well combined, coat the mixture on the carbon paper by using a slurry machine, dry the coated carbon paper for 12 hours at 80°C in vacuum, so as to obtain the positive electrode layer.

Preparation of a negative electrode layer: use a composite material of nano silicon dioxide and carbon (SiO/C) as a raw material of a lithium storage layer, mix the composite material with conductive agent KS modified graphite and binder polyvinylidene fluoride, dissolve the mixture in the organic solution N-methyl pyrrolidone, stir the mixture until well combined, coat the mixture on negative electrode current collector copper foil by using a slurry machine, dry the coated copper foil for 2 hours at 100°C in vacuum until the organic solution N-methyl pyrrolidone is totally volatilized, so as to obtain the lithium storage layer, where a mass ratio of the composite material of nano silicon dioxide and carbon (SiO/C), the KS modified graphite, the polyvinylidene fluoride and the N-methyl pyrrolidone is 1:0.1:0.1:10; use lithium metal foil as a lithium source negative electrode active material layer, dispose the lithium metal foil on a surface of the lithium storage layer, so as to obtain the negative electrode layer, where a mass of the lithium source negative electrode active material layer is 12% of a mass of the lithium storage layer.

Assembly: place the positive electrode layer, the negative electrode layer, and the electrolyte layer into a receiving space formed by a plastic housing, where the reaction layer and the lithium storage layer are connected through a gel electrolyte layer, and a side of the housing adjacent to the positive electrode layer and away from the negative electrode layer is provided with a pore absorbing air from outside the housing, and obtain the lithium-air battery after assembly. The electrolyte layer is polymer electrolyte polyvinylidene fluoride-hexafluoropropylene.

### Embodiment 3

A preparation method of a lithium-air battery includes the following steps:
Preparation of a positive electrode layer: the same as Embodiment 1.

Preparation of a negative electrode layer: use tin alloy as a raw material of a lithium storage layer, mix the tiny alloy with conductive agent KS modified graphite and binder polyvinylidene fluoride, dissolve the mixture in an organic solution N-methyl pyrrolidone, stir the mixture until well combined, coat the mixture on negative electrode current collector copper foil by using a slurry machine, dry the coated copper foil for 3 hours at 90°C in vacuum until the organic solution N-methyl pyrrolidone is totally volatilized, so as to obtain a lithium storage layer, where a mass ratio of the tin alloy, the KS modified graphite, the polyvinylidene fluoride and the N-methyl pyrrolidone is 1:0.2:0.15:10; use lithium metal foil as a lithium source negative electrode active material layer, dispose the lithium metal foil on a surface of the lithium storage layer, so as to obtain the negative electrode layer, where the lithium storage layer is connected to the lithium source negative electrode active material layer through a tab, and a mass of the lithium source negative electrode active material layer is 15% of a mass of the lithium storage layer.

Assembly: place the positive electrode layer, the negative electrode layer, and the electrolyte layer into a receiving space formed by a plastic housing, where the reaction layer and the lithium source negative electrode active material layer are connected through a polymer electrolyte layer, and a side of the housing adjacent to the positive electrode layer and away from the negative electrode layer is provided with a pore absorbing air from outside the housing, and obtain the lithium-air battery after assembly. The electrolyte layer is polymer electrolyte polyvinylidene fluoride-hexafluoropropylene.

### Embodiment 4

A preparation method of a lithium-air battery includes the following steps:
Preparation of a positive electrode layer: the same as Embodiment 2.

Preparation of a negative electrode layer: use germanium cobalt alloy as a raw material of a lithium storage layer, mix the germanium cobalt alloy with conductive agent KS modified graphite and binder polyvinylidene fluoride, dissolve the mixture in an organic solution N-methyl pyrrolidone, stir the mixture until well combined, coat the mixture on negative electrode current collector copper foil by using a slurry machine, dry the coated copper foil for 3 hours at 90°C in vacuum until the organic solution N-methyl pyrrolidone is totally volatilized, so as to obtain the lithium storage layer on the negative electrode current collector, where a mass ratio of the tin alloy, the KS modified graphite, the polyvinylidene fluoride and the N-methyl pyrrolidone is 1:0.03:0.04:10. Use lithium metal foil as a lithium source negative electrode active material layer, dispose the lithium metal foil on a surface of the lithium storage layer, so as to obtain the negative electrode layer, where a mass of the lithium source negative electrode active material layer is 20% of a mass of the lithium storage layer.

Assembly: place the positive electrode layer, the negative electrode layer, and a membrane into a receiving space formed by a stainless steel housing, fill the receiving space with a non-water organic electrolyte to form an electrolyte layer, where the reaction layer and the lithium storage layer are connected through the electrolyte layer, and a side of the housing adjacent to the positive electrode layer and away from the negative electrode layer is provided with a pore absorbing air from outside the housing, and obtain the lithium-air battery after assembly. The non-water organic electrolyte layer is a liquid electrolyte layer that has a concentration of 1M and that is formed by dissolving a lithium salt LiPF₆ into a non-water organic solution with a PC: EMC: DMC volume ratio of 1:1:1. The membrane is a Cellgard membrane.

### Working principle:

When the lithium-air battery is used as a secondary battery, during a first discharge procedure, the negative electrode active material in the lithium source negative electrode active material layer of the negative electrode layer emits lithium ions, the lithium ions enter the reaction layer in the positive electrode layer through the electrolyte layer, electrons are supplied to an external circuit wire through a tab, and the positive electrode layer captures oxygen from an external air environment through a pore that is disposed in the housing and that absorbs air from outside the housing, so that the lithium ions, the oxygen, and the electrons reaching the positive electrode layer through the external circuit perform oxygen reduction, so as to form Li oxide (for example, LiO₂ and Li₂O₂) on the positive electrode layer. In a subsequent charge procedure, the Li oxide in the positive electrode layer is decomposed into Li ions, and the Li ions enter the lithium storage layer through the electrolyte layer and react with the material of the lithium storage layer to form lithium intercalation-state graphite or lithium silicon alloy, lithium tin alloy, and the like. The lithium storage layer does not have any lithium ion originally, and has Li ions intercalated and stored after a first charge procedure, where the Li ions may be used in a subsequent discharge procedure. In the subsequent charge and discharge procedures of the lithium-air battery, the lithium storage layer serves the purpose of deintercalating and intercalating lithium ions, and forms a reaction electrode pair with the positive electrode layer, which can be used cyclically.

By controlling masses of the lithium source negative electrode active material layer and the lithium storage layer, the lithium source negative electrode active material layer may completely disappear after the first discharge, and the emitted lithium ions are intercalated into the lithium storage layer in the subsequent charge procedure. The complete disappearance of the lithium source negative electrode active material layer avoids the phenomena such as dendritic crystal and "dead lithium" to a maximum extent, thereby improving the cycling performance and safety performance of the lithium-air battery.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, ROAM).

## Claims

1. A lithium-air battery, comprising: a positive electrode layer (1), a negative electrode layer (2), and an electrolyte layer (3), wherein the positive electrode layer (1), the negative electrode layer (2) and the electrolyte layer (3) are accommodated in a receiving space formed by a housing, the electrolyte layer (3) is located between the positive electrode layer (1) and the negative electrode layer (2), and a side of the housing adjacent to the positive electrode layer (1) and away from the negative electrode layer (2) is provided with a pore absorbing air from outside the housing; **characterized in that** the positive electrode layer (1) comprises a positive electrode current collector (11) and a reaction layer (12) that is coated or hot-pressed on the positive electrode current collector (11) and that has an oxygen reduction capability; the negative electrode layer (2) comprises a lithium storage layer (21) having lithium ion intercalation and deintercalation capabilities and a lithium source negative electrode active material layer (22) coated or hot-pressed on a surface of the lithium storage layer (21), the lithium storage layer (21) comprising lithium intercalation-state graphite or lithium silicon alloy or lithium tin alloy, and the electrolyte layer is sandwiched between the reaction layer (12) of the positive electrode layer (1) and the negative electrode layer (2).

2. The lithium-air battery according to claim 1, wherein a material of the lithium source negative electrode active material layer is lithium metal, lithium alloy, lithium oxide, or lithium nitride.

3. The lithium-air battery according to claim 1 or 2, wherein the lithium storage layer (21) is mainly formed by one of a graphite negative electrode material, a silicon series negative electrode material, and a tin series negative electrode material, together with a conductive agent and a binder.

4. The lithium-air battery according to claim 1 or 2, wherein a mass of the lithium source negative electrode active material layer is 10% to 20% of a mass of the lithium storage layer (21).

5. The lithium-air battery according to claim 1 or 2, wherein the negative electrode layer (2) further comprises a negative electrode current collector (23), and the negative electrode current collector (23) is covered in the lithium storage layer (21).

6. A preparation method of a lithium-air battery, comprising the following steps:
preparation of a positive electrode layer (1): coat or hot-press a reaction layer (12) having an oxygen reduction capability on a positive electrode current collector (11), so as to obtain the positive electrode layer (1);
preparation of a negative electrode layer (2): add a conductive agent, a binder, and an organic solution to a carbon family material having lithium ion intercalation and deintercalation capabilities, and mix them together to obtain a slurry, and dry the slurry to obtain a lithium storage layer (21); and coat or hot-press a lithium source negative electrode active material layer on a surface of the lithium storage layer (21), so as to obtain the negative electrode layer (2); and
assembly of a lithium-air battery: place the positive electrode layer (1), the negative electrode layer (2) and the electrolyte layer (3) into a receiving space formed by a housing, wherein the electrolyte layer (3) is sandwiched between the reaction layer (12) of the positive electrode layer (1) and the lithium source negative electrode active material layer of the negative electrode layer (2), and a side of the housing adjacent to the positive electrode layer (1) and away from the negative electrode layer (2) is provided with a pore absorbing air from outside the housing.

7. The preparation method of the lithium-air battery according to claim 6, wherein the lithium storage layer (21) is mainly formed by one of a graphite negative electrode material, a silicon series negative electrode material, and a tin series negative electrode material, together with a conductive agent and a binder.

8. The preparation method of the lithium-air battery according to claim 6, wherein a material of the lithium source negative electrode active material layer is lithium metal, lithium alloy, lithium oxide, or lithium nitride.

9. The preparation method of the lithium-air battery according to claim 6, wherein a mass of the lithium source negative electrode active material layer is 10% to 20% of a mass of the lithium storage layer (21).

10. The preparation method of the lithium-air battery according to any one of claims 6 to 9, wherein the dry the slurry to obtain a lithium storage layer (21) comprises mixing them together obtain the slurry and coat the slurry on the negative electrode current collector, and dry the slurry to obtain the lithium storage layer coated on the surface of the negative electrode current collector.

## Patentansprüche

1. Lithium-Luft-Batterie, umfassend: eine positive-Elektrode-Schicht (1), eine negative-Elektrode-Schicht (2) und eine Elektrolytschicht (3), wobei die positive-Elektrode-Schicht (1), die negative-Elektrode-Schicht (2) und die Elektrolytschicht (3) in einem von einem Gehäuse gebildeten Aufnahmeraum angeordnet sind, wobei die Elektrolytschicht (3) zwischen der positive-Elektrode-Schicht (1) und der negative-Elektrode-Schicht (2) angeordnet ist und eine Seite des Gehäuses benachbart zu der positive-Elektrode-Schicht (1) und entfernt von der negative-Elektrode-Schicht (2) mit einer Pore versehen ist, die Luft von außerhalb des Gehäuses absorbiert; **dadurch gekennzeichnet, dass** die positive-Elektrode-Schicht (1) einen positive-Elektrode-Stromabnehmer (11) und eine Reaktionsschicht (12) umfasst, die auf den positive-Elektrode-Stromabnehmer (11) geschichtet oder heißgepresst ist und Sauerstoffreduktionsvermögen aufweist; die negative-Elektrode-Schicht (2) eine Lithiumspeicherschicht (21), die Lithiumionen-Interkalations- und Deinterkalationsvermögen aufweist, und eine negative-Elektrode-Lithiumquelleaktive-Materialschicht (22), die auf eine Oberfläche der Lithiumspeicherschicht (21) geschichtet oder heißgepresst ist, umfasst, wobei die Lithiumspeicherschicht (21) Lithiuminterkalationszustand-Graphit oder Lithium-Silicium-Legierung oder Lithium-Zinn-Legierung umfasst und die Elektrolytschicht zwischen der Reaktionsschicht (12) der positive-Elektrode-Schicht (1) und der negative-Elektrode-Schicht (2) angeordnet ist.

2. Lithium-Luft-Batterie gemäß Anspruch 1, wobei ein Material der negative-Elektrode-Lithiumquelle-aktive-Materialschicht Lithiummetall, Lithiumlegierung, Lithiumoxid oder Lithiumnitrid ist.

3. Lithium-Luft-Batterie gemäß Anspruch 1 oder 2, wobei die Lithiumspeicherschicht (21) hauptsächlich aus einem von einem negative-Elektrode-Graphitmaterial, einem negative-Elektrode-Siliciumreihematerial und einem negative-Elektrode-Zinnreihematerial zusammen mit einem leitfähigen Mittel und einem Bindemittel besteht.

4. Lithium-Luft-Batterie gemäß Anspruch 1 oder 2, wobei die Masse der negative-Elektrode-Lithiumquelle-aktive-Materialschicht 10 % bis 20 % der Masse der Lithiumspeicherschicht (21) beträgt.

5. Lithium-Luft-Batterie gemäß Anspruch 1 oder 2, wobei die negative-Elektrode-Schicht (2) ferner einen negative-Elektrode-Stromabnehmer (23) umfasst und der negative-Elektrode-Stromabnehmer (23) von der Lithiumspeicherschicht (21) bedeckt ist.

6. Herstellungsverfahren für eine Lithium-Luft-Batterie, umfassend die folgenden Schritte:
Herstellen einer positive-Elektrode-Schicht (1): Aufschichten oder Heißpressen einer Reaktionsschicht (12) mit Sauerstoffreduktionsvermögen auf einen positive-Elektrode-Stromabnehmer (11), um die positive-Elektrode-Schicht (1) zu erhalten;
Herstellen einer negative-Elektrode-Schicht (2): Zugeben eines leitfähigen Mittels, eines Bindemittels und einer organischen Lösung zu einem Kohlenstofffamilie-Material mit Lithiumionen-Interkalations- und Deinterkalationsvermögen und Zusammenmischen davon, um eine Aufschlämmung zu erhalten, und Trocknen der Aufschlämmung, um eine Lithiumspeicherschicht (21) zu erhalten; und Aufschichten oder Heißpressen einer negative-Elektrode-Lithiumquelle-aktive-Materialschicht auf eine Oberfläche der Lithiumspeicherschicht (21), um die negative-Elektrode-Schicht (2) zu erhalten; und
Zusammenfügen einer Lithium-Luft-Batterie: Platzieren der positive-Elektrode-Schicht (1), der negative-Elektrode-Schicht (2) und der Elektrolytschicht (3) in einen von einem Gehäuse gebildeten Aufnahmeraum, wobei die Elektrolytschicht (3) zwischen der Reaktionsschicht (12) der positive-Elektrode-Schicht (1) und der negative-Elektrode-Lithiumquelle-aktive-Materialschicht der negative-Elektrode-Schicht (2) angeordnet ist und eine Seite des Gehäuses benachbart zu der positive-Elektrode-Schicht (1) und entfernt von der negative-Elektrode-Schicht (2) mit einer Pore versehen ist, die Luft von außerhalb des Gehäuses absorbiert.

7. Herstellungsverfahren für die Lithium-Luft-Batterie gemäß Anspruch 6, wobei die Lithiumspeicherschicht (21) hauptsächlich aus einem von einem negative-Elektrode-Graphitmaterial, einem negative-Elektrode-Siliciumreihematerial und einem negative-Elektrode-Zinnreihematerial zusammen mit einem leitfähigen Mittel und einem Bindemittel besteht.

8. Herstellungsverfahren für die Lithium-Luft-Batterie gemäß Anspruch 6, wobei ein Material der negative-Elektrode-Lithiumquelle-aktive-Materialschicht Lithiummetall, Lithiumlegierung, Lithiumoxid oder Lithiumnitrid ist.

9. Herstellungsverfahren für die Lithium-Luft-Batterie gemäß Anspruch 6, wobei die Masse der negative-Elektrode-Lithiumquelle-aktive-Materialschicht 10 % bis 20 % der Masse der Lithiumspeicherschicht (21) beträgt.

10. Herstellungsverfahren für die Lithium-Luft-Batterie gemäß einem der Ansprüche 6 bis 9, wobei das Trocknen der Aufschlämmung zum Erhalt einer Lithiumspeicherschicht (21) Zusammenmischen davon, die Aufschlämmung erhalten, und Aufschichten der Aufschlämmung auf den negative-Elektrode-Stromabnehmer und Trocknen der Aufschlämmung umfasst, um die Lithiumspeicherschicht auf die Oberfläche des negative-Elektrode-Stromabnehmers geschichtet zu erhalten.

## Revendications

1. Batterie lithium-air, comprenant : une couche (1) d'électrode positive, une couche (2) d'électrode négative et une couche (3) d'électrolyte, la couche (1) d'électrode positive, la couche (2) d'électrode négative et la couche (3) d'électrolyte étant logées dans un espace de réception formé par un boîtier, la couche (3) d'électrolyte étant située entre la couche (1) d'électrode positive et la couche (2) d'électrode négative et un côté du boîtier adjacent à la couche (1) d'électrode positive et éloigné de la couche (2) électrode négative étant pourvu d'un pore absorbant de l'air depuis l'extérieur du boîtier ; **caractérisée en ce que** la couche (1) d'électrode positive comprend un collecteur (11) de courant d'électrode positive et une couche (12) de réaction qui est revêtue ou pressée à chaud sur le collecteur (11) de courant d'électrode positive et qui présente une aptitude à la réduction de l'oxygène ; la couche (2) d'électrode négative comprend une couche (21) de stockage de lithium, présentant des aptitudes d'intercalation et de désintercalation d'ions de lithium, et une couche (22) de matériau actif d'électrode négative à source de lithium revêtue ou pressée à chaud sur une surface de la couche (21) de stockage de lithium, la couche (21) de stockage de lithium comprenant du graphite dans un état d'intercalation de lithium ou un alliage de lithium-silicium ou un alliage de lithium-étain et la couche d'électrolyte étant prise en sandwich entre la couche (12) de réaction de la couche (1) d'électrode positive et la couche (2) d'électrode négative.

2. Batterie lithium-air selon la revendication 1, un matériau de la couche de matériau actif d'électrode négative à source de lithium étant le lithium métallique, un alliage de lithium, l'oxyde de lithium ou du nitrure de lithium.

3. Batterie lithium-air selon la revendication 1 ou 2, la couche (21) de stockage de lithium étant principalement formée par l'un parmi un matériau d'électrode négative graphitique, un matériau d'électrode négative de la série du silicium et un matériau d'électrode négative de la série de l'étain, ensemble avec un agent conducteur et un liant.

4. Batterie lithium-air selon la revendication 1 ou 2, une masse de la couche de matériau actif d'électrode négative à source de lithium représentant 10% à 20% d'une masse de la couche (21) de stockage de lithium.

5. Batterie lithium-air selon la revendication 1 ou 2, la couche (2) d'électrode négative comprenant en outre un collecteur (23) de courant d'électrode négative et le collecteur (23) de courant d'électrode négative étant recouvert de la couche (21) de stockage de lithium.

6. Procédé de préparation d'une batterie lithium-air, comprenant les étapes suivantes, consistant à : préparer une couche (1) d'électrode positive : recouvrir ou presser à chaud une couche (12) de réaction présentant une aptitude à la réduction de l'oxygène sur un collecteur (11) de courant d'électrode positive de manière à obtenir la couche (1) d'électrode positive ; préparer une couche (2) d'électrode négative :
ajouter un agent conducteur, un liant et une solution organique à un matériau de la famille du carbone, présentant des aptitudes d'intercalation et de désintercalation d'ions de lithium et les mélanger ensemble pour obtenir une suspension et sécher la suspension pour obtenir une couche (21) de stockage de lithium ; et revêtir ou presser à chaud une couche de matériau actif d'électrode négative à source de lithium sur une surface de la couche (21) de stockage de lithium de manière à obtenir la couche (2) d'électrode négative ; et assembler une batterie lithium-air : placer la couche (1) d'électrode positive, la couche (2) d'électrode négative et la couche (3) d'électrolyte dans un espace de réception formé par un boîtier, la couche (3) d'électrolyte étant prise en sandwich entre la couche (12) de réaction de la couche (1) d'électrode positive et la couche de matériau actif d'électrode négative à source de lithium de la couche (2) d'électrode négative et un côté du logement adjacent à la couche (1) d'électrode positive et éloigné de la couche (2) d'électrode négative étant pourvu d'un pore absorbant l'air depuis l'extérieur du boîtier.

7. Procédé de préparation de la batterie lithium-air selon la revendication 6, la couche (21) de stockage de lithium étant principalement formée par l'un parmi un matériau d'électrode négative graphitique, un matériau d'électrode négative de la série du silicium et un matériau d'électrode négative de la série de l'étain, ensemble avec un agent conducteur et un liant.

8. Procédé de préparation de la batterie lithium-air selon la revendication 6, un matériau de la couche de matériau actif d'électrode négative à source de lithium étant le lithium métallique, un alliage de lithium, l'oxyde de lithium ou le nitrure de lithium.

9. Procédé de préparation de la batterie lithium-air selon la revendication 6, une masse de la couche de matériau actif d'électrode négative à source de lithium représentant 10% à 20% d'une masse de la couche (21) de stockage de lithium.

10. Procédé de préparation de la batterie lithium-air selon l'une quelconque des revendications 6 à 9, le séchage de la suspension pour obtenir une couche (21) de stockage de lithium comprenant leur mélange ensemble obtenir la suspension et le revêtement de la suspension sur le collecteur de courant d'électrode négative et le séchage de la suspension pour obtenir la couche de stockage de lithium revêtue sur la surface du collecteur de courant d'électrode négative.
